# EUROPÄISCHE PATENTSCHRIFT

(11) **EP 3 537 873 B1**
(45) Veröffentlichungstag und Bekanntmachung des Hinweises auf die Patenterteilung: **02.12.2020**
(21) Anmeldenummer: 17804291.7
(22) Anmeldetag: 26.10.2017
(51) Int. Cl.: A01K 85/00, A01K 97/04

(54) **HERSTELLUNGSVERFAHREN VON FISCHKÖDERN UND FISCHKÖDER GEMÄSS DIESEM HERSTELLUNGSVERFAHREN**
METHOD FOR PRODUCING FISH LURE AND FISH LURE PRODUCED BY SAID PRODUCTION METHOD
PROCÉDÉ DE FABRICATION DE LEURRES DE PÊCHE ET LEURRE DE PÊCHE SELON LEDIT PROCÉDÉ DE FABRICATION

(30) Priorität: 14.11.2016 CH 15012016
(43) Veröffentlichungstag der Anmeldung: 18.09.2019
(73) Patentinhaber: Koch, Hansjörg, 5610 Wohlen (CH)
(72) Erfinder: Koch, Hansjörg, 5610 Wohlen (CH)
(74) Vertreter: Spierenburg, Pieter
(86) Internationale Anmeldenummer: PCT/IB2017/056656
(87) Internationale Veröffentlichungsnummer: WO 2018/087620

(56) Entgegenhaltungen:
- GB-A- 443 400
- JP-A- 2005 060 361
- US-A- 3 820 269
- US-A- 5 173 316

## Beschreibung

### TECHNISCHES GEBIET

Die Erfindung betrifft ein Herstellungsverfahren von Fischködern nach dem Oberbegriff des Patentanspruchs 1 und ein Fischköder hergestellt nach diesem Verfahren gemäss Patentanspruch 10.

### STAND DER TECHNIK

Die Konservierung von organischen und anorganischen Materialien ist grundsätzlich bekannt. Beispielsweise ist in EP 0 852 922 B1 ein Verfahren beschrieben, bei welchem das zu konservierende Material mit einer härtbaren Zusammensetzung imprägniert wird, die eine Organosiliciumverbindung oder eine Mischung aus Organosiliciumverbindungen enthält, und danach das Material mit einem Katalysator oder einer Mischung aus Katalysatoren ausgehärtet wird. Ein Verfahren zur Herstellung von Fischködern wird nicht beschrieben. Lediglich wird ein Experiment mit kleinen Goldfischen beschrieben, wobei ausdrücklich von einer Vakuumbehandlung abgeraten wird, da der Goldfisch zu fragil war und entweder zerbrach oder sich teilte. In einem sehr aufwändigen Verfahren wurden weiter zwei Goldfische dehydriert und imprägniert, die jedoch unterschiedliche Resultate ergeben haben.

In GB 443 400 A wird ein Verfahren zur Herstellung von Fischködern beschrieben, bei welchem Fische dehydriert und imprägniert werden, wobei in einem ersten Schritt frisch tote Fischkörper in Längsrichtung an einem horizontalen Träger fixiert werden und eine Mischung von Wachs und Portland-Zement in die Fischkörper eingelassen wird, und in einem meheren Schritte die Fischkörpfer in Flüssigkeit mit zunehmend mehr Azeton getränkt und entwässert werden. Die Fischkörper werden sodann getrocknet und mit einem geeigneten Lack wie Zellulose-Azetat überzogen.

### AUFGABE DER ERFINDUNG

Der vorliegenden Erfindung liegt nun die Aufgabe zugrunde, ein Verfahren zur Herstellung von Fischködern anzugeben, bei welchem Fische dehydriert und anschliessend imprägniert werden, dass ein einheitlich gutes Resultat ermöglicht.

Diese Aufgabe wird durch ein Verfahren mit den Merkmalen des Patentanspruchs 1 gelöst.

Die Erfindung hat den Vorteil, dass die Herstellung von Fischködern in einem einfacheren Verfahren durchgeführt werden kann und ein lebensechtes Abbild von einem Fisch ergibt.

### BESCHREIBUNG DER ERFINDUNG

Weitere Vorteile der Erfindung folgen aus den abhängigen Patentansprüchen und aus der nachfolgenden Beschreibung, in welcher die Erfindung anhand eines in den schematischen Zeichnungen dargestellten Ausführungsbeispieles näher erläutert wird. Es zeigt:
- Fig. 1: die einzelnen Verfahrensschritte zur Herstellung von Fischködern, und
- Fig. 2: ein Lochblech mit daran aufgehängten Fischkörpern.

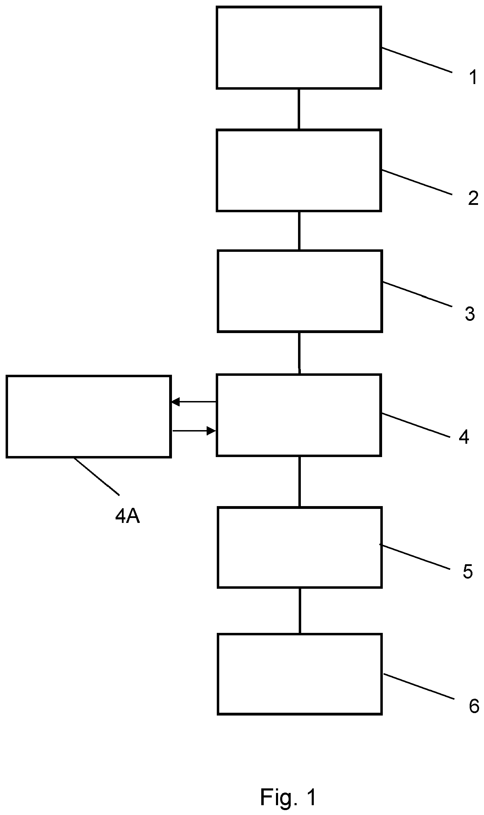

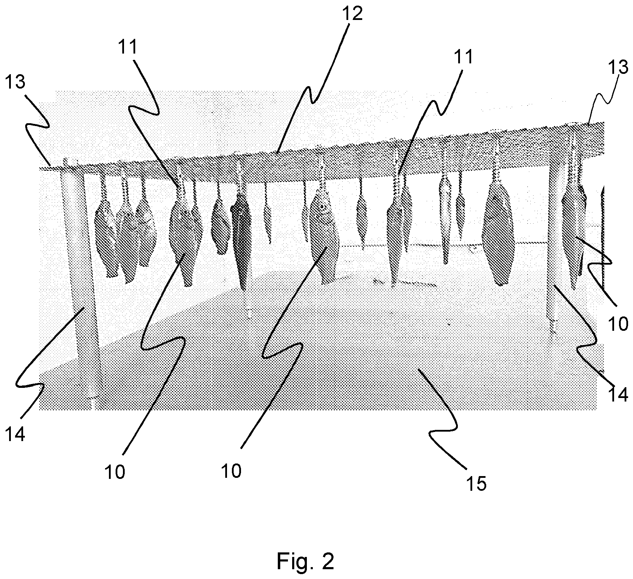

In einem ersten Verfahrensschritt 1 in Figur 1 werden frisch gefangene, tote Fischkörper 10 (siehe Figur 2) mit einer Schraube 11 an einem als horizontalen Träger 12 vorgesehenen Lochblech aufgehängt. Dazu wird die Schraube 11 zunächst durch das Lochblech 12 hindurchgeführt und dann in den Mund des Fisches bis zum Ende des Magens hineingedreht. Das Lochblech 12 ist an den vier Ecken 13 von vier Stützen 14 auf einem Boden 15 abgestützt. Durch die Schwerkraft und die senkrechte Aufhängung der Fischkörper 10 ist eine gerade Fixierung gewährleistet. Nachdem das Lochblech 12 mit der gewünschten Anzahl Fischkörpern 10 bestückt ist, wird es in einen Gefrierschrank gestellt und während etwa zwei Stunden dort belassen, bis die Fischkörper 10 vollkommen gefroren sind. Anschliessend werden die Schrauben 11 aus den gefrorenen Fischkörpern 10 herausgedreht und die Fischkörper 10 bei ungewünschter Form manuell ausgerichtet. Die Fischkörper 10 können so als Schüttgut für den nächsten Verfahrensschritt praktisch gelagert werden. Zusätzlich können noch die Augen der gefrorenen Fischkörpern 10 mit einem Mikrobohrer mit einem Durchmesse von etwa 0,5 mm angebohrt werden. Ferner können je nach Bedarf längs des Rückens und längs der Bauchpartie der Fischkörper 10 kleine Öffnungen angebracht werden, welche die Imprägnierung begünstigen.

Im zweiten Verfahrensschritt 2 werden die gefrorenen Fischkörper 10 in tiefgekühltem Azeton getränkt und entwässert. Für eine wirksame Entwässerung werden 50 Gramm Gewichtsanteile Azeton pro 1 Gramm Gewichtsanteil des Fischkörpers 10 benötigt. Die Fischkörper 10 werden in entsprechenden Behältern in einem explosionsgeschützten Gefrierschrank bei einer Temperatur von minus 20 bis minus 30 Grad Celsius, vorzugsweise bei minus 25 Grad Celsius, gelagert und so entwässert. Dabei findet ein Austausch von Körperflüssigkeit des Fischkörpers 10 und dem Azeton in direkter Umgebung des Fischkörpers 10 statt, bis das Azeton im Behälter einen Wasseranteil von weniger als einem Prozent aufweist. Der Wasseranteil wird mit einem Refraktometer gemessen.

Im dritten Verfahrensschritt 3 wird das Azeton mit den Fischkörpern 10 auf Raumtemperatur gebracht, um die Fischkörper 10 zu entfetten. Durch das Austreten des Fettes färbt sich das Azeton gelblich. Dieser Verfahrensschritt 3 ist abgeschlossen, wenn keine Verfärbung nach dem Austauschen des Azetons mehr auftritt.

Im vierten Verfahrensschritt 4 werden die Fischkörper 10 in einer Vakuumkammer imprägniert, indem das Azeton durch ein geeignetes Imprägniermittel während mehreren Tagen unter Vakuum ersetzt wird. Das Azeton tritt in Blasenform aus, während gleichzeitig das Imprägniermittel eintritt. Der Vorgang wird fortgesetzt, bis kein Azeton mehr austritt, danach ist dieser Verfahrensschritt 4 abgeschlossen. Dieser Vorgang kann mehrere Tage bis zu einer Woche dauern. Die Imprägnierung kann als Teilimprägnierung oder als Vollimprägnierung durchgeführt werden (siehe unten).

In einer Variante des Herstellungsverfahrens wird dem Fischkörper 10 in einem separaten Schritt 4A das komplette Azeton durch Vakuum und Wärme entzogen. Durch das Verdampfen des Azetons im Vakuum entstehen keine Falten oder sichtbare Verformungen. Der Verfahrensschritt 4 ist abgeschlossen, wenn sich das Gewicht des Fischkörpers 10 nach zehn Stunden nicht verändert. Die Gewichtsveränderung kann mit einer Mikrowaage gemessen werden. Der Fischkörper 10 besteht dann nur noch aus Gewebe ohne jeglichem Fett oder Flüssigkeit. Durch das Trocknen des Fischkörpers 10 dauert die effektive Imprägnierung des gesamten Fischgewebes nur etwa zwei Stunden. Es kann auch nur eine Teilimprägnierung ohne Restschadstoffe im Gewebe vorgesehen werden, was noch weniger Zeit in Anspruch nimmt und die Fischköder noch wirtschaftlicher hergestellt werden können.

Bei der Teilimprägnierung gemäss Verfahrensschritt 4 werden die getrockneten Fischkörper 10 in einen Behälter mit einem beliebigen Imprägniermittel eingetaucht. Wie bei den gängigen Harzen, Ölen, Silikaten, Lacken oder Flüssigschaumstoffen muss der Fischkörper 10 durch eine mechanische Fixierung vollständig im Imprägniermittel gehalten werden, da der Fischkörper 10 sonst aufschwimmt und sich verformt. Der Behälter mit den eingetauchten Fischkörpern 10 wird sodann in einen Vakuumbehälter gestellt. Es wird nur ein leichtes Vakuum von beispielsweise etwa 50 Millibar erzeugt, um die entsprechende Imprägnierflüssigkeit in die Fischkörper 10 eindringen zu lassen.

Die fertigen Fischköder müssen verschiedene Anforderungen erfüllen, weshalb die Fischkörper 10 ganz oder nur teilweise imprägniert werden. Dabei kommt es auf das gewählte Vakuum und die gewählte Zeitdauer an. Dies ist mit den herkömmlichen, aus dem Stand der Technik bekannten Methoden der Vollimprägnierung nicht möglich, da sich sonst Restazeton im Fischkörper befindet, was Probleme bei der Aushärtung durch unerwünschte chemische Reaktionen erzeugen kann. Reststoffe wie Azeton sind wasserlöslich und giftig im Wasser

Durch Zerstörungsproben nach dem Aushärten (siehe unten) können die genauen Parameter definiert werden.

Bei der Imprägnierung des gesamten Fischgewebes mit Imprägniermittel mit einem grösseren spezifischen Gewicht als Wasser wird der Fischkörper 10 sinken. Die Teilimprägnierung der Bauchregion durch Ausnutzung der natürlichen Gewichtsverteilung des Fischkörpers 10 lässt den Fischköder mit dem Rücken an der Wasseroberfläche schwimmen. Es können auch Imprägniermittel verwendet werden, die leichter als Wasser sind. Dadurch ist die Schwimmfähigkeit gewährleistet. Bei der Teilimprägnierung können, im Gegensatz zur Vollimprägnierung, Imprägniermittel mit einer kurzen Topfzeit verwendet werden, da nicht mehr als zirka zwei Stunden benötigt werden. Der Vorteil einer Teilimprägnierung sorgt demnach für eine grössere Vielfalt in der Wahl der Imprägniermittel. Zusätzlich kann Metallpulver in der grossen Öffnung von Mund bis Anus für die Kopflastigkeit oder für ein besseres Schwebeverhalten beigegeben werden.

Bei der Vollimprägnierung gemäss Verfahrensschritt 4 werden die Fischkörper 10 direkt aus dem Azetonbad in einem Behälter mit Imprägniermittel getaucht, dass in Kontakt mit Azeton keine chemische Reaktion auslöst, wobei die Fischkörper 10 durch eine mechanische Fixierung vollständig im Imprägniermittel gehalten werden. Der Behälter mit den eingetauchten Fischkörpern 10 wird in einen Vakuumbehälter gestellt. Die Verarbeitungstemperatur ist je nach Topfzeit der entsprechenden Imprägnierflüssigkeiten anders. Anschliessend wird ein Vakuum erzeugt, damit ein Austausch von Azeton und Imprägnierflüssigkeit in den Fischkörpern 10 erfolgen kann.

Als Beispiel kann die Vollimprägnierung wie folgt aussehen:

| **Schritt** | **Millibar** | **Zeit (Std.)** |
|---|---|---|
| 1 | 30 | 10 |
| 2 | 15 | 10 |
| 3 | 10 | 10 |
| 4 | 5 | 10 |
| 5 | 2 | 10 |
| 6 | (Ruhephase ohne Vakuum) | 24 |
| 7 | 2 | Intervall 48 Std. |
| | | (3 Std. Vakuum, 3 Std. Ruhephase) |

Die Angaben beziehen sich auf Fischkörper 10 von etwa 8 cm. Danach werden die Fischkörper 10 ohne Vakuum für minimal 24 Stunden in der selben Flüssigkeit gelagert, um Spannungen zu verhindern.

Im Verfahrensschritt 5 werden die mit dem Imprägniermittel getränkten Fischkörper 10 bei Raumtemperatur ausgehärtet. Dazu werden die Fischkörper 10 nach der Entspannungsphase aus der Imprägnierflüssigkeit entnommen. Je nach Aushärtungseigenschaften werden UV Licht, Reaktionshärtung, Wärmehärtung oder dergleichen angewendet.

Im Verfahrensschritt 6 können durch die Öffnung im Bereich des Mundes bis zum Anus vom Fischkörper 10 entsprechende Schaufeln (nicht dargestellt) in diversen Grössen und Formen eingedreht werden, welche der Öffnung angepasst sind. Die Fischkörper 10 können je nach Fischereitechnik mit oder ohne Schaufel ausgestattet werden. Auch können dann je nach Fischereimethode Ösen und Fischerhaken am ausgehärteten Fischkörper 10 angebracht werden.

## Patentansprüche

1. Verfahren zur Herstellung von Fischködern, bei welchem Fische dehydriert und anschliessend imprägniert werden, **dadurch gekennzeichnet, dass** in einem ersten Schritt (1) frische tote Fischkörper (10) in Längsrichtung an einem horizontalen Träger fixiert und aufgehängt werden und diese in einem Gefrierschrank gefroren werden, in einem zweiten Schritt (2) die gefrorenen Fischkörper (10) in tiefgekühltem Azeton getränkt und entwässert werden, in einem dritten Schritt (3) das Azeton auf Raumtemperatur gebracht wird, um die Fischkörper (10) zu entfetten, in einem vierten Schritt (4) die Fischkörper (10) in einer Vakuumkammer imprägniert werden, indem das Azeton durch ein geeignetes Imprägniermittel während mehreren Tagen unter Vakuum ersetzt wird, und in einem fünften Schritt (5) die mit dem Imprägniermittel getränkten Fischkörper (10) bei Raumtemperatur ausgehärtet werden.

2. Verfahren nach Anspruch 1, **dadurch gekennzeichnet, dass** die Fixierung der toten Fische derart erfolgt, indem eine Schraube (11) durch den Mund des Fischkörpers (10) bis zum Ende des Fischmagens eingedreht wird und die Schraube (11) in einen horizontalen Träger eingehängt wird.

3. Verfahren nach Anspruch 2, **dadurch gekennzeichnet, dass** die Schraube (11) aus dem gefroreren Fischkörper (10) herausgedreht wird und der Fischkörper (10) bei nicht gewünschter Form nachgerichtet wird.

4. Verfahren nach Anspruch 3, **dadurch gekennzeichnet, dass** die Augen des gefrorenen Fischkörpers (10) mittels eines Mikrobohrers angebohrt werden.

5. Verfahren nach Anspruch 4, **dadurch gekennzeichnet, dass** längs des Rückens und längs der Bauchpartie des gefrorenen Fischkörpers (10) kleine Öffnungen angebracht werden, welche die Imprägnierung begünstigen.

6. Verfahren nach einem der Ansprüche 1 bis 5, **dadurch gekennzeichnet, dass** im zweiten Schritt (2) das Azeton auf eine Temperatur von minus 20 bis minus 30 Grad Celcius, vorzugsweise um minus 25 Grad Celsius, gekühlt wird.

7. Verfahren nach einem der Ansprüche 1 bis 6, **dadurch gekennzeichnet, dass** im vierten Schritt (4, 4A) als Imprägniermittel Harzen, Ölen, Silikaten, Lacken oder Flüssigschaumstoffe verwendet werden.

8. Verfahren nach Anspruch 7, **dadurch gekennzeichnet, dass** der Fischkörper (10) durch eine Fixierung vollständig im Imprägniermittel gehalten wird.

9. Verfahren nach einem der Ansprüche 1 bis 8, **dadurch gekennzeichnet, dass** im fünften Schritt (5) die Fischkörper (10) mittels UV-Licht, Reaktionshärter oder Wärme ausgehärtet werden.

10. Fischköder hergestellt nach einem Verfahren nach einem der Ansprüche 1 bis 9, wobei im ausgehärteten Fischkörper (10) eine passende Schaufel in der Mundöffnung bis zum Anus des Fisches angebracht ist.

11. Fischköder nach Anspruch 10, **dadurch gekennzeichnet, dass** eine oder mehrere Ösen am ausgehärteten Fischkörper (10) angebracht ist.

## Claims

1. Method for producing fish baits, in which fish are dehydrated and subsequently impregnated, **characterized in that** in a first step (1) fresh dead fish bodies (10) are attached and suspended in the longitudinal direction on a horizontal carrier and then frozen in a deep freezer, in a second step (2) the frozen fish bodies (10) are impregnated in deep-frozen acetone and dewatered, in a third step (3) the acetone is brought to room temperature to defat the fish bodies (10), in a fourth step (4) the fish bodies (10) are impregnated in a vacuum chamber by replacing the acetone with a suitable impregnating agent for several days under vacuum, and in a fifth step (5) the fish bodies (10) impregnated with the impregnating agent are cured at room temperature.

2. Method according to claim 1, **characterized in that** the fixing of the dead fish is carried out by twisting a screw (11) through the mouth of the fish body (10) to the end of the fish stomach and hanging the screw (11) in a horizontal carrier.

3. Method according to claim 2, **characterized in that** the screw (11) is twisted out the frozen fish body (10) and the fish body (10) is straightened when the shape is not desired.

4. Method according to claim 3, **characterized in that** the eyes of the frozen fish body (10) are drilled by means of a micro-drill.

5. Method according to claim 4, **characterized in that** small openings are made along the back and along the belly section of the frozen fish body (10) to promote impregnation.

6. Method according to one of claims 1 to 5, **characterized in that** in the second step (2) the acetone is cooled to a temperature of minus 20 to minus 30 degrees Celsius, preferably by minus 25 degrees Celsius.

7. Method according to one of claims 1 to 6, **characterized in that** in the fourth step (4, 4A) resins, oils, silicates, lacquers or liquid foams are used as impregnating agents.

8. Method according to claim 7, **characterized in that** the fish body (10) is completely held in the impregnating agent by a fixation.

9. Method according to one of claims 1 to 8, **characterized in that** in the fifth step (5) the fish bodies (10) are cured by means of UV light, reaction hardener or heat.

10. Fish bait produced according to a method according to one of claims 1 to 9, wherein a suitable shovel is attached in the hardened fish body (10) in the mouth opening up to the anus of the fish.

11. Fish bait according to claim 10, **characterized in that** one or more eyelets are attached to the cured fish body (10).

## Revendications

1. Procédé pour la fabrication d'appâts à poisson dans lequel des poissons sont déshydratés puis imprégnés, **caractérisé en ce que** des corps de poissons (10) morts frais sont fixés dans le sens longitudinal sur un support horizontal et suspendus puis congelés dans une armoire de congélation dans une première étape (1), les corps de poissons (10) congelés sont trempés dans l'acétone à très basse température et déshydratés dans une deuxième étape (2), l'acétone est amenée à température ambiante pour dégraisser les corps de poissons (10) dans une troisième étape (3), les corps de poissons (10) sont imprégnés dans une chambre à vide dans une quatrième étape (4) par le fait que l'acétone est remplacé par un produit d'imprégnation pendant plusieurs jours sous vide, et les corps de poissons (10) imprégnés du produit d'imprégnation sont durcis à température ambiante dans une cinquième étape (5).

2. Procédé selon la revendication 1, **caractérisé en ce que** les poissons morts sont fixés en vissant une vis (11) par la bouche du corps de poisson (10) jusqu'à l'extrémité de l'estomac du poisson et la vis (11) est accrochée dans un support horizontal.

3. Procédé selon la revendication 2, **caractérisé en ce que** la vis (11) est retirée du corps de poisson (10) congelé et le corps de poisson (10) est redressé s'il n'a pas la forme souhaitée.

4. Procédé selon la revendication 3, **caractérisé en ce que** les yeux du corps de poisson (10) congelé sont forés au moyen d'une microforeuse.

5. Procédé selon la revendication 4, **caractérisé en ce que** des petites ouvertures favorisant l'imprégnation sont formées le long du dos et le long du ventre du corps de poisson (10) congelé.

6. Procédé selon l'une des revendications 1 à 5, **caractérisé en ce que**, dans la deuxième étape (2), l'acétone est refroidie à une température de -20 à -30 degrés Celsius, de préférence de l'ordre de -25 degrés Celsius.

7. Procédé selon l'une des revendications 1 à 6, **caractérisé en ce que** l'on utilise comme produits d'imprégnation dans la quatrième étape (4, 4A) des résines, des huiles, des silicates, des vernis ou des mousses liquides.

8. Procédé selon la revendication 7, **caractérisé en ce que** le corps de poisson (10) est entièrement maintenu dans le produit d'imprégnation par une fixation.

9. Procédé selon l'une des revendications 1 à 8, **caractérisé en ce que**, dans la cinquième étape (5), les corps de poissons (10) sont durcis au moyen de lumière UV, de durcisseurs réactifs ou de chaleur.

10. Appât à poissons fabriqué par un procédé selon l'une des revendications 1 à 9, dans lequel une bavette adaptée est introduite dans le corps de poisson (10) durci par l'ouverture buccale jusqu'à l'anus du poisson.

11. Appât à poissons selon la revendication 10, **caractérisé en ce qu'**un ou plusieurs œillets sont disposés sur le corps de poisson (10) durci.
